# EUROPEAN PATENT APPLICATION

(11) **EP 4 832 112 A1**
(43) Date of publication of application: **28.10.2026**
(21) Application number: 24916468.2
(22) Date of filing: 27.09.2024
(51) Int. Cl.: H01M 4/58, H01M 4/36, H01M 4/525, H01M 10/0525, H01M 4/131

(54) **POSITIVE ELECTRODE ACTIVE MATERIAL AND PREPARATION METHOD THEREOF, POSITIVE POLE PIECE, SECONDARY BATTERY AND ELECTRICAL DEVICE**

(30) Priority: 08.01.2024 CN 202410026192
(71) Applicant: Contemporary Amperex Technology Co., Limited, Ningde, Fujian 352100 (CN)
(72) Inventor: BIE, Changfeng, Ningde, Fujian 352100 (CN); HUANG, Yang, Ningde, Fujian 352100 (CN); CHEN, Xudong, Ningde, Fujian 352100 (CN); LIU, Hongyu, Ningde, Fujian 352100 (CN); ZHEN, Xiaofeng, Ningde, Fujian 352100 (CN); NI, Huan, Ningde, Fujian 352100 (CN); ZHANG, Haiming, Ningde, Fujian 352100 (CN); LIU, Na, Ningde, Fujian 352100 (CN)
(74) Representative: Kraus & Lederer PartGmbB
(86) International application number: PCT/CN2024/122019
(87) International publication number: WO 2025/148417

(57) **Abstract**

A positive electrode active material, the positive electrode active material comprises lithium iron phosphate particles and lithium nickel cobalt manganate particles, wherein the primary average particle size of the lithium iron phosphate particles is 500-3000 nm, the specific surface area BET of the lithium iron phosphate particles is 3m²/g-8m²/g, and the specific surface area BET of the lithium nickel cobalt manganate particles is 0.4m²/g-2.0m²/g. The positive electrode active material has good processability, and also has good gram capacity

## Description

### CROSS-REFERENCE

The present application claims priority to Chinese Patent Application No. 202410026192.7 filed on January 8, 2024 and entitled "POSITIVE ELECTRODE ACTIVE MATERIAL AND PREPARATION METHOD THEREFOR, POSITIVE ELECTRODE PLATE, SECONDARY BATTERY, AND ELECTRIC DEVICE", which is incorporated herein by reference in its entirety.

### TECHNICAL FIELD

The present application relates to the technical field of secondary batteries, and in particular, to a positive electrode active material and a preparation method therefor, a positive electrode plate, a secondary battery, and an electric device.

### BACKGROUND

In recent years, lithium-ion batteries have been widely used in energy storage power systems such as hydropower, thermal power, wind power, and solar power stations, as well as in various fields such as electric tools, electric bicycles, electric motorcycles, electric vehicles, military equipment, and aerospace.

Lithium nickel cobalt manganese oxide-based materials and lithium iron phosphate-based materials are commonly used lithium-ion positive electrode active materials. To reduce the cost of lithium-ion batteries, the lithium nickel cobalt manganese oxide-based materials and the lithium iron phosphate-based materials can be used in combination; however, a series of processing problems exist during the process of mixing the lithium nickel cobalt manganese xide-based materials and the lithium iron phosphate-based materials to prepare a positive electrode slurry.

### SUMMARY

The present application is made in view of the problems described above and aims to solve at least one of the technical problems existing in the prior art. To this end, the present application provides a positive electrode active material and a preparation method therefor, a positive electrode plate, a secondary battery, and an electric device. The positive electrode active material of the present application has good processability while also ensuring the specific capacity of the secondary battery.

According to a first aspect of the present application, a positive electrode active material is provided. The positive electrode active material includes lithium iron phosphate particles and lithium nickel cobalt manganese oxide particles; an average primary particle size of the lithium iron phosphate particles is 500-3000 nm, a specific surface area BET of the lithium iron phosphate particles is 3-8 m²/g, and a specific surface area BET of the lithium nickel cobalt manganese oxide particles is 0.4-2.0 m²/g.

To improve the electrochemical performance of lithium iron phosphate particles, the lithium iron phosphate particles are usually nano-sized to improve the electron transport capability of the lithium iron phosphate particles. However, an excessively large specific surface area of the nano-sized lithium iron phosphate particles leads to severe water absorption of the nano-sized lithium iron phosphate particles. In practical applications, to reduce costs, the lithium iron phosphate particles are often mixed with lithium nickel cobalt manganese oxide particles. However, during the preparation of a mixed slurry, the lithium iron phosphate particles are prone to gelation due to high water absorption, resulting in a series of processing problems, such as low solid content and poor filtration performance. Furthermore, high-molecular-weight binders, such as polyvinylidene fluoride, used in the lithium nickel cobalt manganese oxide positive electrode slurry have the problem of poor compatibility with nano-sized lithium iron phosphate. In this type of binder system, the lithium iron phosphate particles are prone to agglomeration, thereby resulting in processing problems. In the present application, the average primary particle size of the lithium iron phosphate particles is 500-3000 nm, the specific surface area of the lithium iron phosphate particles is 3-8 m²/g, and the specific surface area of the lithium nickel cobalt manganese oxide particles is 0.4-2.0 m²/g. The reduced specific surface area is conducive to reducing the water absorption capability of the positive electrode slurry, thereby reducing the gelation and agglomeration during slurry processing, and also increasing the drying speed and drying degree of the electrode plate. Additionally, a larger average primary particle size is conducive to the better dispersion of the lithium iron phosphate particles in a high-molecular-weight binder system, thereby further reducing the occurrence of agglomeration. However, an excessively large particle size and an excessively low specific surface area will affect the kinetic performance and reduce the specific capacity. In the positive electrode active material of the present application, the average primary particle size of the lithium iron phosphate particles is increased, and the specific surface area of the lithium iron phosphate particles is decreased; by controlling the average primary particle size and the specific surface area within a reasonable range, good processability is achieved while also ensuring the specific capacity of the secondary battery.

In any embodiment, the lithium iron phosphate particles have a molecular formula Liₘ₁Feₓ₁P_{y1}O_{z1}Q_{q1}, where Q includes at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1, and/or
the lithium nickel cobalt manganese oxide particles have a molecular formula LiRₓ₂Ni_{y2}Co_{z2}Mn_{1-x2-y2-z2}O₂, where R includes at least one of Cr, Ti, V, Mg, Al, or Nb, 0 ≤ x2 < 1, 0 < y2 < 1, 0 < z2 < 1, and 0 < x2 + y2 + z2 < 1.

Doping the above elements into the lithium iron phosphate particles and/or the lithium nickel cobalt manganese oxide particles helps to improve the ion transport capability of the positive electrode active material. The above elements can create vacancies in the particle lattice or change the interatomic bond length, facilitating the movement of lithium ions in the lattice, thereby effectively improving the conductive performance of the particles themselves and improving the kinetic performance of the positive electrode active material.

In any embodiment, an average primary particle size of the lithium iron phosphate particles is 650-2500 nm.

Controlling the average primary particle size of the lithium iron phosphate particles within a reasonable range is conducive to further improving the processability of the positive electrode slurry while ensuring the specific capacity of the secondary battery.

In any embodiment, a BET of the lithium iron phosphate particles is 4-7 m²/g, and a BET of the lithium nickel cobalt manganese oxide particles is 0.6-2.0 m²/g.

An excessively high BET of the lithium iron phosphate particles and/or the lithium nickel cobalt manganese oxide particles will increase the water absorption capability of the particles, affecting the processability of the mixed positive electrode slurry. However, an excessively low BET of the lithium iron phosphate particles and the lithium nickel cobalt manganese oxide particles will reduce the specific capacity and the kinetic performance of the lithium iron phosphate particles and the lithium nickel cobalt manganese oxide particles. Controlling the BET of the lithium iron phosphate particles within 4-7 m²/g and controlling the BET of the lithium nickel cobalt manganese oxide particles within 0.6-2.0 m²/g is conducive to further balancing the processability of the positive electrode slurry and the specific capacity of the secondary battery.

In any embodiment, calculated based on a total weight of the lithium iron phosphate particles, a carbon content of the lithium iron phosphate particles is Cx wt%, and a ratio z of the BET of the lithium iron phosphate particles to Cx satisfies 1.5 ≤ z ≤ 8.5; in some embodiments, z satisfies 3 ≤ z ≤ 6.

In the present application, the ratio z of the specific surface area BET of the lithium iron phosphate particles to Cx can characterize the uniform density of the carbon contained in the lithium iron phosphate particles; when the average primary particle size and the carbon content of the lithium iron phosphate particles remain unchanged, the lower the ratio z is, the more uniform and dense the carbon contained in the lithium iron phosphate particles is. Increasing the uniform density of the contained carbon is conducive to further improving the kinetic performance and the specific capacity of the lithium iron phosphate particles, but an excessively high carbon coating density will affect the intercalation and deintercalation of lithium ions, thereby affecting the kinetic performance and the specific capacity of the secondary battery to a certain extent. In the examples of the present application, the range of the ratio z is conducive to allowing the carbon contained in the lithium iron phosphate particles to have a suitable uniform density, which is conducive to improving the conductive performance of the particle surface and further improving the kinetic performance and the specific capacity of the secondary battery.

In any embodiment, calculated based on a total weight of the lithium iron phosphate particles, a carbon content of the lithium iron phosphate particles is 0.8-2.0 wt%; in some embodiments, calculated by a total weight of the lithium iron phosphate particles, a carbon content of the lithium iron phosphate particles is 1.0-1.6 wt%.

Increasing the carbon content of the lithium iron phosphate particles is conducive to improving the conductive performance of the lithium iron phosphate particles, thereby improving the kinetic performance and the specific capacity; however, an excessively high carbon content may affect the intercalation and deintercalation of lithium ions, thereby affecting the specific capacity of the secondary battery to a certain extent. In the present application, the carbon content range helps to further obtain better kinetic performance and specific capacity.

In any embodiment, Q includes at least one of Ti, V, Mg, or Nb; in some embodiments, Q is Ti.

Calculated based on a total weight of the lithium iron phosphate particles, a content of Q in the lithium iron phosphate particles is 1000-10000 ppm; in some embodiments, calculated by a total mass of the lithium iron phosphate particles, the content of Q in the lithium iron phosphate particles is 2500-6000 ppm.

The content of doping elements in the existing lithium iron phosphate particles is generally low, or no doping element is added. Increasing the content of element Q in the lithium iron phosphate particles helps to further improve the bulk-phase ion transport capability of the lithium iron phosphate particles, thereby improving the kinetic performance of the lithium iron phosphate particles. However, with the further increase of the content of element Q, the bulk-phase ion transport capability may not continuously increase, and element Q may also occupy the position of lithium ions, thus affecting the specific capacity. In the present application, the range of element Q helps to further obtain better kinetic performance and specific capacity.

In any embodiment, a ratio of a Dv50 of the lithium iron phosphate particles to a Dv50 of the lithium nickel cobalt manganese oxide particles is 1:(1-25); in some embodiments, the ratio of the D50 value of the lithium iron phosphate particles to the Dv50 of the lithium nickel cobalt manganese oxide particles is 1:(1-20).

In any embodiment, a Dv50 of the lithium iron phosphate particles is 500-5000 nm; in some embodiments, the Dv50 of the lithium iron phosphate particles is 700-2500 nm.

In any embodiment, a Dv50 of the lithium nickel cobalt manganese oxide particles is 1200-20000 nm; in some embodiments, the Dv50 of the lithium nickel cobalt manganese oxide particles is 3000-15000 nm.

In the examples of the present application, controlling the Dv50 ratio range and the value range of the lithium iron phosphate particles and the lithium nickel cobalt manganese oxide particles within the above ranges facilitates the uniform and tight packing of the lithium iron phosphate particles among the lithium nickel cobalt manganese oxide particles, alleviates the agglomeration of single-component particles in the composite positive electrode active material, and improves the compacted density of the positive electrode active material.

In any embodiment, a Dv50 of the lithium iron phosphate particles is 870-1500 nm, and a Dv50 of the lithium nickel cobalt manganese oxide particles is 1800-4200 nm.

In any embodiment, calculated by a total mass of the positive electrode active material, a mass percentage of the lithium iron phosphate particles is 5%-80%, and in some embodiments, 15%-50%.

In any embodiment, calculated by a total mass of the positive electrode active material, a mass percentage of the lithium nickel cobalt manganese oxide particles is 20%-95%, and in some embodiments, 50%-85%.

Controlling the mass percentages of the lithium iron phosphate particles and the lithium nickel cobalt manganese oxide particles within the above ranges helps to further balance the electrical performance and cost of the positive electrode active material.

In any embodiment, a capacity proportion η of the lithium iron phosphate particles is ≥ 88%, and η is defined as follows:
A battery having the lithium iron phosphate particles as a positive electrode active material is charged and discharged at a constant current of 0.1C for two cycles in a voltage range of 2.0-3.75 V, and then charged and discharged at a constant current of 1C for one cycle; in the charge-discharge test at 1C, a capacity value at a discharge voltage of 3.2 V is extracted and recorded as C1, a capacity value upon discharging to 2.0 V is extracted and recorded as C2, and η = C1 / C2; where the charging process includes constant-voltage charging, with a constant voltage of 3.75 V and a constant-voltage cutoff current of 50 uA.

The capacity proportion η of the lithium iron phosphate particles can reflect the kinetic performance and plateau retention performance of the lithium iron phosphate particles, and can be adjusted by adjusting the average primary particle size, the carbon content, the proportion of the carbon source to the carbon film-forming agent, and the modifier and the content thereof of the lithium iron phosphate particles. In the examples of the present application, the η value of the lithium iron phosphate particles is ≥ 88%, indicating good kinetic performance. Additionally, when the η value is relatively high, and the secondary battery is discharged to a low SOC (State of Charge of the battery), the secondary battery can still maintain good power performance. That is, when a battery with a high η value is discharged at a low power level and a large current, the voltage drop value of the battery is relatively small. In the present application, during the discharging of the positive electrode active material, the lithium nickel cobalt manganese oxide particles have a high voltage and participate in discharging first, and the lithium iron phosphate particles participate in discharging subsequently, bear a relatively large current, and are prone to polarization. The lithium iron phosphate particles of the present application possess a high kinetic performance, which is conducive to improving the discharge power performance of the secondary battery.

In any embodiment, the lithium iron phosphate particles satisfy at least one of (a) to (e):
a) a Dv10 of the lithium iron phosphate particles is ≥ 200 nm;
b) a Dv90 of the lithium iron phosphate particles is ≤ 10000 m;
c) a Dv99 of the lithium iron phosphate particles is ≤ 12000 nm;
d) a powder compacted density of the lithium iron phosphate under a pressure of 3T is ≥ 2.25 g/cm³; or
e) a powder resistivity of the lithium iron phosphate is less than 60 Ω·cm.

By enabling the lithium iron phosphate particles to satisfy at least one of (a) to (e), the lithium iron phosphate particles can better achieve the technical effects of the present application.

According to a second aspect of the present application, a preparation method for a positive electrode active material is provided. The preparation method includes: mixing lithium iron phosphate particles and lithium nickel cobalt manganese oxide particles.

A preparation process of the lithium iron phosphate particles includes: providing raw materials containing at least a lithium source, an iron source, a phosphorus source, optionally a carbon source, optionally a carbon film-forming agent, and optionally a modifier, and performing sintering at least twice, where
a temperature of a first sintering is 500-760 °C, and in some embodiments, 550-720 °C; and
a temperature of a second sintering is 700-800 °C, and in some embodiments, 720-780 °C.

Compared to the conventional preparation method of achieving particle growth at a high temperature, the lithium iron phosphate particles of the present application are subjected to sintering twice. Controlling the temperatures of the two sintering processes is conducive to preparing the lithium iron phosphate particles having the average primary particle size and specific surface area of the present application. Furthermore, during conventional high-temperature sintering, the carbon coating layer on the surface of the particles is prone to cracking, reducing the integrity of the carbon coating. In the present application, synthesizing large particles at a low temperature is conducive to reducing floating carbon and improving the consistency and uniformity of the surface carbon coating.

In any embodiment, the lithium iron phosphate particles are mainly obtained by a following preparation method: providing raw materials containing at least a lithium source, an iron source, a phosphorus source, a carbon source, a carbon film-forming agent, and a modifier, and performing sintering at least twice, where
a carbon content of a material after a first sintering is 0.01-0.79 wt%, and in some embodiments, 0.05-0.4 wt%; and
a carbon content of a material after a second sintering is 0.8-2.0 wt%, and in some embodiments, 1.0-1.6 wt%.

Adding the carbon source before the first sintering can effectively reduce the trivalent iron in the raw materials and improve the product purity and stability. Furthermore, adding a lower content of the carbon source during the first sintering is conducive to reducing the hindering effect of the carbon layer on the growth process of the lithium iron phosphate particles, and is conducive to the crystalline growth of the lithium iron phosphate particle precursor at a lower temperature. Additionally, the low carbon content during the first sintering is also conducive to the solid-phase diffusion reaction between the possibly added modifier and the lithium iron phosphate material, thereby facilitating a relatively high concentration of metal ion doping. Increasing the added carbon content in the second sintering further improves the uniformity and integrity of the coating, which is conducive to obtaining the lithium iron phosphate particles having the carbon content according to the examples of the present application.

In any embodiment, the lithium iron phosphate particles contain at least one of Ti, V, Mg, and/or Nb elements, and calculated based on a total weight of the lithium iron phosphate particles, a content of the elements is 1000-10000 ppm, and in some embodiments, 2500-6000 ppm.

In any embodiment, a first pulverization is performed after the first sintering, and a second pulverization is performed after the second sintering, where
a Dv50 of a product after the first pulverization is 300-1200 nm, and in some embodiments, 400-1100 nm; and
a Dv50 of a product after the second pulverization is 500-5000 nm, and in some embodiments, 700-2500 nm.

Controlling the Dv50 of the product after the first pulverization within the above range is conducive to reducing the hindering effect of the added carbon source and the possibly added doping elements on the crystal growth of the lithium iron phosphate particle precursor, which helps to prepare a micron-sized lithium iron phosphate particle precursor. Controlling the Dv50 value of the product after the second pulverization within the above range helps to obtain the lithium iron phosphate particles having the average primary particle size of the present application.

According to a third aspect of the present application, a positive electrode plate is provided. The positive electrode plate includes the positive electrode active material according to the present application or a positive electrode active material obtained by the preparation method according to the present application.

In any embodiment, a compacted density of the positive electrode plate is 3.0-3.5 g/cm³.

According to a fourth aspect of the present application, a secondary battery is provided. The secondary battery includes the positive electrode plate according to the present application.

According to a fifth aspect of the present application, an electric device is provided. The electric device includes the secondary battery according to the present application.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

FIG. 1 is a cross-sectional view of a positive electrode plate in Example 1 of the present application, where FIG. 1a is a cross-sectional view of the positive electrode plate at a magnification of 5k, and FIG. 1b is a cross-sectional view of the positive electrode plate at a magnification of 10k.
FIG. 2 is a scanning electron microscope image of lithium iron phosphate particles in Example 1 of the present application.
FIG. 3 is a schematic view of a secondary battery according to an embodiment of the present application.
FIG. 4 is an exploded view of the secondary battery according to an embodiment of the present application shown in FIG. 3.
FIG. 5 is a schematic view of a battery module according to an embodiment of the present application.
FIG. 6 is a schematic view of a battery pack according to an embodiment of the present application.
FIG. 7 is an exploded view of the battery pack according to an embodiment of the present application shown in FIG. 6.
FIG. 8 is a schematic view of an electric device using a secondary battery as a power source according to an embodiment of the present application.
FIG. 9 is a scanning electron microscope image of lithium iron phosphate particles, with primary particle sizes marked thereon, according to an embodiment of the present application.

### Description of the reference numerals:

1: battery pack; 2: upper case body; 3: lower case body; 4: battery module; 5: secondary battery; 51: shell body; 52: electrode assembly; 53: top cover assembly.

### DETAILED DESCRIPTION

Hereinafter, embodiments specifically disclosing a positive electrode active material and a manufacturing method therefor, a positive electrode plate, a secondary battery, a battery module, a battery pack, and an electric device of the present application will be described in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a specific parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 and 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the terms "include/comprise" and "contain" mentioned in the present application are open-ended or closed-ended. For example, the terms "include/comprise" and "contain" may mean that other unlisted components may also be included/comprised or contained or that only the listed components are included/comprised or contained.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

To balance battery costs and the electrical performance of batteries, lithium iron phosphate-based materials and lithium nickel cobalt manganese oxide-based materials can be mixed to prepare a positive electrode active material. The lithium iron phosphate particles have the problem of poor electrical performance. To improve the electrical performance of lithium iron phosphate particles, the lithium iron phosphate particles are usually nano-sized to improve the electron transport capability of the lithium iron phosphate particles. However, during the process of mixing the lithium iron phosphate particles and the lithium nickel cobalt manganese oxide particles to prepare a slurry, the positive electrode slurry is prone to gelation and severe agglomeration, resulting in a series of processing problems such as a low solid content, poor filtration performance, strong water absorption of the electrode plate, and difficulty in drying. In the present application, by increasing the average primary particle size of the lithium iron phosphate particles, decreasing the specific surface area of the lithium iron phosphate particles, and controlling the specific surface area of the lithium iron phosphate particles within a reasonable range, good processability is achieved while also ensuring the specific capacity of the secondary battery. Additionally, the decrease in the BET and the decrease in the water absorption capability of the lithium iron phosphate particles are also conducive to reducing the occurrence of side reactions and improving the cycle life of the cell.

### [Positive Electrode Active Material]

Based on this, the present application provides a positive electrode active material. The positive electrode active material includes lithium iron phosphate particles and lithium nickel cobalt manganese oxide particles. The average primary particle size of the lithium iron phosphate particles is 500-3000 nanometers (nm), the specific surface area BET of the lithium iron phosphate particles is 3-8 square meters/gram (m²/g), and the specific surface area BET of the lithium nickel cobalt manganese oxide particles is 0.4-2.0 m²/g.

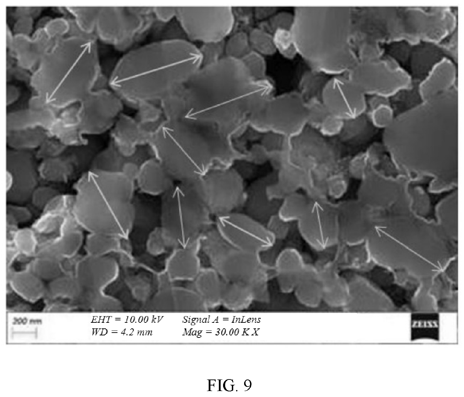

In the present application, the term "average primary particle size" refers to the average value of the primary particle sizes of all particles, where the primary particle size refers to the longest distance connecting two points on the edge in a cross-sectional image. In a specific embodiment, as shown in the scanning electron microscope image of the lithium iron phosphate particles in FIG. 9, line segments marked with double arrows in the particles are the primary particle sizes defined in the present application.

In the present application, the term "specific surface area" or "BET" refers to the total area of particles per unit mass; in the present application, the BET of the lithium iron phosphate particles is related to factors such as the average primary particle size of the lithium iron phosphate particles, the carbon content, the density of the carbon coating, degree of adhesion between carbon and the particles, and the degree of looseness and porosity of the particles.

In some embodiments, the lithium iron phosphate particles are primary particles.

Herein, the "primary particle" refers to the particle having no obvious agglomeration interface in the particle scanning electron microscope image, but possibly having tiny pores and point or line defects, and the primary particle is distinguished from the powder particle of the smallest unit, having no structure such as stacking or flocculation.

In some embodiments, the lithium iron phosphate particles are single crystal particles and/or polycrystalline particles.

Herein, the term "single crystal" refers to a structurally complete crystal grown from one crystal nucleus. The single crystal of the present application is an integral whole in the field of view of a transmission electron microscope image, and no grain boundaries exist inside the single crystal.

In some embodiments, the single crystal of the present application may have tiny defects, for example, having internal micropores or a small number of points and surfaces, or having a small number of particles adhered to each other on the surface of one particle.

Herein, the term "polycrystal" refers to the crystal formed by a randomly oriented combination of small single crystal particles, and grain boundaries exist inside the polycrystal.

In some embodiments, based on the total number of the lithium iron phosphate particles, the number proportion of single crystal particles is greater than or equal to 90%. Controlling the number proportion of single crystal particles within the above range results in a relatively high proportion of single crystal particles compared to polycrystals and secondary agglomerates, which is conducive to reducing the BET and improving the processability.

The average primary particle size of the lithium iron phosphate particles may be measured by methods and devices known in the art. For example, the test may be performed by using a scanning electron microscope and a long-diameter statistical method. As an example, an argon ion beam is applied perpendicularly to a major surface of the positive electrode plate to cut open the electrode plate and expose a cross section; the cross section is photographed using a scanning electron microscope; the long-diameter statistical method is used to perform the statistical analysis on particle sizes of the lithium iron phosphate particles; specifically, the total number of lithium iron phosphate particles having a primary particle size greater than 80 nm and the sum of primary particle sizes of the lithium iron phosphate particles having a primary particle size greater than 80 nm may be statistically calculated in a scanning electron microscope photograph, and the average primary particle size of the lithium iron phosphate particles = the sum of the primary particle sizes of the lithium iron phosphate particles / the total number of the lithium iron phosphate particles. During the statistical calculation of the primary particle size, particles satisfying 0 < primary particle size ≤ 80 nm are not within the statistical scope.

To improve the electrical performance of lithium iron phosphate particles, the lithium iron phosphate particles are usually nano-sized to improve the electron transport capability of the lithium iron phosphate particles. However, the specific surface area of the nano-sized lithium iron phosphate particles is too large, causing the nano-sized lithium iron phosphate particles to absorb water severely. Therefore, during the process of mixing the lithium iron phosphate particles with lithium nickel cobalt manganese oxide particles to prepare a slurry, the lithium iron phosphate particles are prone to gelation due to high water absorption, resulting in a series of processing problems, such as low solid content and poor filtration performance. Furthermore, the nano-sized lithium iron phosphate particles have the problem of poor compatibility with high-molecular-weight binders commonly used in preparing positive electrode active materials of lithium nickel cobalt manganese oxide particles, such as polyvinylidene fluoride. In this type of binder system, the lithium iron phosphate particles are prone to agglomeration, thereby resulting in processing problems. In the present application, the average primary particle size of the lithium iron phosphate particles is 500-3000 nm; additionally, the specific surface area of the lithium iron phosphate particles is further adjusted to 3-8 m²/g, and the specific surface area of the lithium nickel cobalt manganese oxide particles is adjusted to 0.4-2.0 m²/g. The reduced specific surface area is conducive to reducing the water absorption capability of the positive electrode slurry, thereby reducing the gelation and agglomeration during slurry processing, and also increasing the drying speed and drying degree of the slurry. Additionally, a larger average primary particle size is conducive to the better dispersion of the lithium iron phosphate particles in a high-molecular-weight binder system, thereby further reducing the occurrence of agglomeration. However, an excessively large particle size and an excessively low specific surface area will reduce the specific capacity of the positive electrode active material. In the positive electrode active material of the present application, the average primary particle size of the lithium iron phosphate particles is increased, the specific surface area of the lithium iron phosphate particles is decreased, and the specific surface area of the lithium nickel cobalt manganese oxide particles is decreased; by controlling the average primary particle size and the specific surface area within a reasonable range, good processability is achieved while also ensuring the specific capacity of the secondary battery.

In some embodiments, the lithium iron phosphate particles have a molecular formula Liₘ₁Feₓ₁P_{y1}O_{z1}Q_{q1}, where Q includes at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1, and/or
the lithium nickel cobalt manganese oxide particles have a molecular formula LiRₓ₂Ni_{y2}Co_{z2}Mn_{1-x2-y2-z2}O₂, where R includes at least one of Cr, Ti, V, Mg, Al, or Nb, 0 ≤ x2 < 1, 0 < y2 < 1, 0 < z2 < 1, and 0 < x2 + y2 + z2 < 1.

In some embodiments, the lithium iron phosphate particles have a molecular formula Liₘ₁Feₓ₁P_{y1}O_{z1}Q_{q1}, where m1 may be 0.95, 0.98, 1.00, 1.03, 1.05, 1.08, 1.10, 1.13, or 1.15, x1 may be 0.9 or 1.0, y1 may be 0.95, 0.98, 1.00, 1.03, 1.05, 1.08, 1.10, 1.13, or 1.15, z1 may be 3.5, 3.6, 3.7, 3.8, 3.9, or 4, and q1 may be 0, 0.01, 0.02, 0.03, 0.04, 0.05, 0.06, 0.07, 0.08, 0.09, or 0.1.

In some embodiments, the lithium nickel cobalt manganese oxide particles have a molecular formula LiRₓ₂Ni_{y2}Co_{z2}Mn_{1-x2-y2-z2}O₂, where R includes at least one of Ti, V, Mg, or Nb.

In some embodiments, the lithium nickel cobalt manganese oxide particles have a molecular formula LiRₓ₂Ni_{y2}Co_{z2}Mn_{1-x2-y2-z2}O₂, where x2 may be 0, 0.1, 0.2, 0.3, 0.4, 0.5, 0.5, 0.7, 0.8, or 0.9, y2 may be 0.1, 0.2, 0.3, 0.4, 0.5, 0.5, 0.7, 0.8, or 0.9, and z2 may be 0.1, 0.2, 0.3, 0.4, 0.5, 0.5, 0.7, 0.8, or 0.9. In some embodiments, the content ratio of the lithium element to the oxygen element in the lithium nickel cobalt manganese oxide particles fluctuates during the formation and cycling processes of the battery.

Doping the above elements into the lithium iron phosphate particles and/or the lithium nickel cobalt manganese oxide particles helps to improve the ion transport capability of the positive electrode active material. The above elements can create vacancies in the particle lattice or change the interatomic bond length, facilitating the movement of lithium ions in the lattice, thereby effectively improving the conductive performance of the particles themselves and improving the kinetic performance of the positive electrode active material.

In some embodiments, the average primary particle size of the lithium iron phosphate particles is 650-2500 nm.

In some embodiments, the average primary particle size of the lithium iron phosphate particles may be 500 nm, 550 nm, 600 nm, 650 nm, 700 nm, 730 nm, 750 nm, 780 nm, 800 nm, 830 nm, 850 nm, 870 nm, 900 nm, 950 nm, 1000 nm, 1100 nm, 1200 nm, 1300 nm, 1400 nm, 1500 nm, 2000 nm, 2100 nm, 2200 nm, 2300 nm, 2400 nm, 2500 nm, 2600 nm, 2700 nm, 2800 nm, 2900 nm, 3000 nm, or a numerical value within a range defined by any two of the aforementioned average primary particle sizes.

Controlling the average primary particle size of the lithium iron phosphate particles within a reasonable range is conducive to further improving the processability of the positive electrode slurry while ensuring the specific capacity of the secondary battery.

In some embodiments, the BET of the lithium iron phosphate particles is 4-7 m²/g, and the BET of the lithium nickel cobalt manganese oxide particles is 0.6-2.0 m²/g.

In some embodiments, the specific surface area BET of the lithium iron phosphate particles may be 3 m²/g, 3.5 m²/g, 4 m²/g, 4.5 m²/g, 5 m²/g, 5.5 m²/g, 6 m²/g, 6.5 m²/g, 7 m²/g, 7.5 m²/g, 8 m²/g, or a numerical value within a range defined by any two of the aforementioned specific surface areas BET of the lithium iron phosphate particles.

In some embodiments, the specific surface area BET of the lithium nickel cobalt manganese oxide particles may be 0.6 m²/g, 0.8 m²/g, 1.0 m²/g, 1.2 m²/g, 1.4 m²/g, 1.6 m²/g, 1.8 m²/g, 2.0 m²/g, or a numerical value within a range defined by any two of the aforementioned specific surface areas BET of the lithium nickel cobalt manganese oxide particles.

The specific surface area BET of the particles may be measured by methods and devices known in the art. For example, the test may be performed according to the gas adsorption method with reference to GB/T 19587-2017. As an example, lithium iron phosphate particles are taken as a sample and placed into a sample tube, and the sample tube is immersed in liquid nitrogen at -196 °C; the adsorption amount of nitrogen gas on a solid surface under different pressures is determined at a relative pressure of 0.05-0.30, and a monolayer adsorption amount of the sample is calculated based on the BET multilayer adsorption theory and the formula thereof, thereby obtaining the specific surface area of the sample.

An excessively high BET of the lithium iron phosphate particles and/or the lithium nickel cobalt manganese oxide particles will increase the water absorption capability of the particles, affecting the processability of the mixed positive electrode slurry. An excessively low BET of the lithium iron phosphate particles and the lithium nickel cobalt manganese oxide particles will reduce their specific capacity. Controlling the BET of the lithium iron phosphate particles within 4-7 m²/g and controlling the BET of the lithium nickel cobalt manganese oxide particles within 0.6-2.0 m²/g is conducive to further balancing the processability of the positive electrode slurry and the specific capacity of the secondary battery.

In some embodiments, calculated based on the total weight of the lithium iron phosphate particles, the carbon content of the lithium iron phosphate particles is Cx wt%, and a ratio z of the BET of the lithium iron phosphate particles to Cx satisfies 1.5 ≤ z ≤ 8.5.

In some embodiments, z satisfies 3 ≤ z ≤ 6.

In some embodiments, z may be 1.5, 1.8, 2, 2.3, 2.5, 2.8, 3, 3.2, 3.5, 3.8, 4, 4.3, 4.5, 4.8, 5, 5.3, 5.5, 5.8, 6, 6.3, 6.5, 6.8, 7, 7.3, 7.5, 7.8, 8, 8.3, 8.5, or a numerical value within a range defined by any two of the aforementioned z values.

In the present application, the ratio z of the specific surface area BET of the lithium iron phosphate particles to Cx can characterize the uniform density of the carbon contained in the lithium iron phosphate particles. When the average primary particle size and the carbon content of the lithium iron phosphate particles remain unchanged, the lower the ratio z is, the higher the coating utilization rate of the carbon in the particles is, the less floating carbon there is, and the more uniform and dense the carbon contained in the lithium iron phosphate particles is. Increasing the uniform density of the contained carbon is conducive to improving the kinetic performance and specific capacity of the lithium iron phosphate particles. However, an excessively high carbon coating density may affect the intercalation and deintercalation of lithium ions, thereby affecting the kinetic performance and specific capacity of the secondary battery to a certain extent. In the examples of the present application, the range of the ratio z is conducive to allowing the carbon contained in the lithium iron phosphate particles to have a suitable uniform density, which is conducive to improving the conductive performance of the particle surface and further improving the kinetic performance and the specific capacity of the secondary battery.

In some embodiments, calculated based on the total weight of the lithium iron phosphate particles, the carbon content of the lithium iron phosphate particles is 0.8-2.0 wt%.

In some embodiments, calculated by the total weight of the lithium iron phosphate particles, the carbon content of the lithium iron phosphate particles is 1.0-1.6 wt%.

In some embodiments, calculated based on the total weight of the lithium iron phosphate particles, the carbon content of the lithium iron phosphate particles is 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, or a numerical value within a range defined by any two of the aforementioned carbon contents.

In some embodiments, the carbon contained in the lithium iron phosphate particles is coated on the surfaces of the particles. In some embodiments, the carbon contained in the lithium iron phosphate particles is embedded in the particles. In some embodiments, the carbon contained in the lithium iron phosphate particles is partially coated on the surfaces of the particles and partially embedded in the particles.

The carbon content of the iron phosphate particles may be measured by methods and devices known in the art. For example, the test may be performed with reference to GB/T 20123-2006/ISO 15350:2000.

Increasing the carbon content of the lithium iron phosphate particles is conducive to improving the conductive performance of the lithium iron phosphate particles, thereby improving the kinetic performance and the specific capacity; however, an excessively high carbon content may affect the intercalation and deintercalation of lithium ions, thereby affecting the specific capacity of the secondary battery to a certain extent. In the examples of the present application, the carbon content range helps to further obtain better kinetic performance and specific capacity.

In some embodiments, Q includes at least one of Ti, V, Mg, or Nb. In some embodiments, Q is Ti.

In some embodiments, calculated based on the total weight of the lithium iron phosphate particles, the content of Q in the lithium iron phosphate particles is 1000-10000 parts per million (1000-10000 ppm).

In some embodiments, calculated by the total mass of the lithium iron phosphate particles, the content of Q in the lithium iron phosphate particles is 2500-6000 ppm.

In some embodiments, calculated based on the total weight of the lithium iron phosphate particles, the content of Q in the lithium iron phosphate particles is 1000 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, 9500 ppm, 10000 ppm, or a numerical value within a range defined by any two of the aforementioned Q contents.

The content of Q, for example, the content of Ti, in the lithium iron phosphate particles may be measured by methods and devices known in the art. For example, the test may be performed with reference to GB/T 33822-2017.

The content of doping elements in the existing lithium iron phosphate particles is generally low, or no doping element is added. Increasing the content of element Q in the lithium iron phosphate particles helps to further improve the bulk-phase ion transport capability of the lithium iron phosphate particles, thereby improving the kinetic performance of the lithium iron phosphate particles. However, with the further increase of the content of element Q, the bulk-phase ion transport capability may not continuously increase, and element Q may also occupy the position of lithium ions, thus affecting the specific capacity. In the present application, the range of element Q helps to further obtain better kinetic performance and specific capacity.

In some embodiments, a ratio of the Dv50 of the lithium iron phosphate particles to the Dv50 of the lithium nickel cobalt manganese oxide particles is 1:(1-25).

In some embodiments, a ratio of the D50 value of the lithium iron phosphate particles to the Dv50 of the lithium nickel cobalt manganese oxide particles is 1:(1-20).

In some embodiments, the ratio of the Dv50 of the lithium iron phosphate particles to the Dv50 of the lithium nickel cobalt manganese oxide particles may be 1:1, 1:3, 1:5, 1:7, 1:10, 1:13, 1:15, 1:20, 1:23, 1:25, or a numerical value within a range defined by any two of the aforementioned ratios of the Dv50 of the lithium iron phosphate particles to the Dv50 of the lithium nickel cobalt manganese oxide particles.

In some embodiments, the Dv50 of the lithium iron phosphate particles is 500-5000 nm.

In some embodiments, the Dv50 of the lithium iron phosphate particles is 700-2500 nm.

In some embodiments, the Dv50 of the lithium iron phosphate particles is 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, 2300 nm, 2500 nm, 2700 nm, 3000 nm, 3300 nm, 3500 nm, 3700 nm, 4000 nm, 4300 nm, 4500 nm, 4700 nm, 5000 nm, or a numerical value within a range defined by any two of the aforementioned Dv50 values of the lithium iron phosphate particles.

In some embodiments, the Dv50 of the lithium nickel cobalt manganese oxide particles is 1200-20000 nm.

In some embodiments, the Dv50 of the lithium nickel cobalt manganese oxide particles is 3000-15000 nm.

In some embodiments, the Dv50 of the lithium nickel cobalt manganese oxide particles may be 1200 nm, 1500 nm, 1700 nm, 2000 nm, 2300 nm, 2500 nm, 2700 nm, 3000 nm, 3300 nm, 3500 nm, 4000 nm, 4300 nm, 4500 nm, 4700 nm, 5000 nm, 6000 nm, 7000 nm, 8000 nm, 9000 nm, 10000 nm, 11000 nm, 12000 nm, 13000 nm, 14000 nm, 15000 nm, 16000 nm, 17000 nm, 18000 nm, 19000 nm, 20000 nm, or a numerical value within a range defined by any two of the aforementioned Dv50 values of the lithium nickel cobalt manganese oxide particles.

In the present application, the term "Dv50" refers to the corresponding particle size when the cumulative volume particle size distribution percentage of particles reaches 50%.

The Dv50 of the lithium iron phosphate particles and the Dv50 of the lithium nickel cobalt manganese oxide particles may be measured by methods and devices known in the art. For example, determination may be performed using a laser particle size analyzer (Malvern Master Size 3000) with reference to GB/T19077.1-2016.

In the examples of the present application, controlling the Dv50 ratio range and the value range of the lithium iron phosphate particles and the lithium nickel cobalt manganese oxide particles within the above ranges facilitates the uniform and tight packing of the lithium iron phosphate particles among the lithium nickel cobalt manganese oxide particles, alleviates the agglomeration of single-component particles in the composite positive electrode active material, and improves the compacted density of the positive electrode active material.

In some embodiments, the Dv50 of the lithium iron phosphate particles is 870-1500 nm, and the Dv50 of the lithium nickel cobalt manganese oxide particles is 1800-4200 nm.

In some embodiments, calculated by the total mass of the positive electrode active material, the mass percentage of the lithium iron phosphate particles is 5%-80%.

In some embodiments, calculated by the total mass of the positive electrode active material, the mass percentage of the lithium iron phosphate particles is 15%-50%.

In some embodiments, calculated by the total mass of the positive electrode active material, the mass percentage of the lithium iron phosphate particles may be 5%, 10%, 15%, 20%, 25%, 30%, 35%, 40%, 45%, 50%, 55%, 60%, 65%, 70%, 75%, 80%, or a numerical value within a range defined by any two of the aforementioned mass percentages of the lithium iron phosphate particles.

In some embodiments, calculated by the total mass of the positive electrode active material, the mass percentage of the lithium nickel cobalt manganese oxide particles is 20%-95%.

In some embodiments, calculated by the total mass of the positive electrode active material, the mass percentage of the lithium nickel cobalt manganese oxide particles is 50%-85%.

In some embodiments, calculated by the total mass of the positive electrode active material, the mass percentage of the lithium nickel cobalt manganese oxide particles may be 20%, 25%, 30%, 35%, 40%, 45%, 50%, 55%, 60%, 65%, 70%, 75%, 80%, 85%, 90%, 95%, or a numerical value within a range defined by any two of the aforementioned mass percentages of the lithium nickel cobalt manganese oxide particles.

Controlling the mass percentages of the lithium iron phosphate particles and the lithium nickel cobalt manganese oxide particles within the above ranges helps to further balance the electrical performance and cost of the positive electrode active material.

In some embodiments, a capacity proportion η of the lithium iron phosphate particles is ≥ 88%, and η is defined as follows:

A battery having the lithium iron phosphate particles as the positive electrode active material is charged and discharged at a constant current of 0.1C for two cycles in a voltage range of 2.0-3.75 volts (V), and then charged and discharged at a constant current of 1C for one cycle; in the charge-discharge test of 1C, a capacity value at a discharge voltage of 3.2 V is extracted and recorded as C1, a capacity value upon discharging to 2.0 V is extracted and recorded as C2, and η = C1 / C2. The charging process includes constant-voltage charging, with a constant voltage of 3.75 V and a constant-voltage cutoff current of 50 microamperes (uA).

In some embodiments, η may be 88%, 89%, 90%, 91%, 92%, 93%, 94%, 95%, or a numerical value within a range defined by any two of the aforementioned η values.

The η value of the lithium iron phosphate particles may be measured by methods and devices known in the art. As an example, a coin cell is first prepared using the lithium iron phosphate particles as a positive electrode active material. The specific preparation process of the coin cell is as follows: 2.0000 grams (g) of the lithium iron phosphate particles is mixed with 0.1111 g of conductive carbon black and 0.1111 g of polyvinylidene fluoride, and then the mixture is added to 2.5 g of an organic solvent N-methylpyrrolidone, followed by full and uniform mixing to form a slurry. The slurry is coated on an aluminum foil with a coating thickness of 140 micrometers (µm); the coated aluminum foil is vacuum-dried at 120 degrees Celsius (°C) for 2 hours (h) and punched into a circular disc with a diameter of 13 millimeters (mm) using a punch. The circular disc is pressed at 10 megapascals (MPa) using a tablet press and kept under vacuum at 120 °C for 12 h to obtain a positive electrode plate. The positive electrode plate is weighed, where the loading capacity of the lithium iron phosphate particles is 11-12 milligrams (mg). The coin cell is assembled in an argon-protected glove box, where a lithium metal foil is used as the negative electrode, the electrolytic solution is a mixed solvent of EC (ethylene carbonate) and DMC (1,2-dimethyl carbonate) at a volume ratio of 1:1, the electrolyte is LiPF6, and the separator is a Celgard 2400 microporous polyethylene film.

Electrical properties of the prepared coin cell are tested on a LAND battery tester. Specifically, the coin cell is charged and discharged at a constant current of 0.1C for two cycles in a voltage range of 2.0-3.75 V, and then charged and discharged at a constant current of 1C for one cycle; in the charge-discharge test at 1C, the capacity value at the discharge voltage of 3.2 V is extracted and recorded as C1, the capacity value upon discharging to 2.0 V is extracted and recorded as C2, and η = C1 / C2. The charging process includes constant-voltage charging, with a constant voltage of 3.75 V and a constant-voltage cutoff current of 50 uA.

The capacity proportion η of the lithium iron phosphate particles can reflect the kinetic performance and plateau retention performance of the lithium iron phosphate particles, and can be adjusted by adjusting the average primary particle size, the carbon content, the proportion of the carbon source to the carbon film-forming agent, and the modifier and the content thereof of the lithium iron phosphate particles. In the examples of the present application, the η value of the lithium iron phosphate particles is ≥ 88%, indicating good kinetic performance. Additionally, when the η value is relatively high, and the secondary battery is discharged to a low SOC, the secondary battery can still maintain good power performance. That is, when a battery with a high η value is discharged at a low power level and a large current, the voltage drop value of the battery is relatively small. In the examples of the present application, during the discharging of the positive electrode active material, the lithium nickel cobalt manganese oxide particles have a high voltage and participate in discharging first, and the lithium iron phosphate particles participate in discharging subsequently, bear a relatively large current, and are prone to polarization. The lithium iron phosphate particles of the present application possess a high kinetic performance, which is conducive to improving the discharge power performance of the secondary battery.

In some embodiments, the lithium iron phosphate particles satisfy at least one of (a) to (e):
a) a Dv10 of the lithium iron phosphate particles is ≥ 200 nm;
b) a Dv90 of the lithium iron phosphate particles is ≤ 10000 m;
c) a Dv99 of the lithium iron phosphate particles is ≤ 12000 nm;
d) a powder compacted density of the lithium iron phosphate under a pressure of 3T is ≥ 2.25 grams/cubic centimeter (g/cm³); or
e) a powder resistivity of the lithium iron phosphate is less than 60 ohm-centimeters (Ω·cm).

Herein, the term "Dv10" refers to the corresponding particle size when the cumulative volume particle size distribution percentage of particles reaches 10%.

Herein, the term "Dv90" refers to the corresponding particle size when the cumulative volume particle size distribution percentage of particles reaches 90%.

Herein, the term "Dv99" refers to the corresponding particle size when the cumulative volume particle size distribution percentage of particles reaches 99%.

Herein, the term "powder compacted density" refers to the density of a compact (in g/cm³) having a certain density and strength formed during a compression process under an external force, where, with the movement and deformation of the powder, larger voids are filled, and the contact area between particles increases, thereby generating interatomic attractive forces and enhancing mechanical interlocking between the particles.

In some embodiments, the Dv10 of the lithium iron phosphate particles is < Dv50.

In some embodiments, the Dv90 of the lithium iron phosphate particles is > Dv50.

The Dv10, Dv90, and Dv99 of the lithium iron phosphate particles may be measured by methods and devices known in the art. For example, determination may be performed using a laser particle size analyzer (Malvern Master Size 3000) with reference to GB/T19077.1-2016.

The powder compacted density of the lithium iron phosphate particles under different pressures may be measured by methods and devices known in the art. For example, measurement may be performed using a compacted density instrument with reference to GB/T 24533-2009. Specifically, a certain amount of the lithium iron phosphate particles is placed in a special compaction mold (with a known mold diameter), and the mold features a hollow center with a metal disc at both the top and the bottom. The lithium iron phosphate particles are placed between the metal discs, a metal cylinder is placed on the top, and the mold is placed on the compacted density instrument. Different pressures (e.g., 3T) are set, and the thickness of the lithium iron phosphate particles under different pressures can be read on the device. The powder compacted density of the lithium iron phosphate particles is ρ = m/v, where v = (S × H), m represents the mass of the lithium iron phosphate particles, S represents the bottom area of the mold, and H represents the thickness of the compacted lithium iron phosphate particles.

The powder resistivity of the lithium iron phosphate particles may be measured by methods and devices known in the art. For example, measurement may be performed using a powder resistivity meter (Suzhou Jingge, model ST2722) with reference to GB/T 33822-2017. Specifically, a certain amount of the lithium iron phosphate particles (e.g., 1 g) is weighed and added to the feeding chamber of the powder resistivity meter. A pressure of 8 MPa is applied, and the forward resistivity and the reverse resistivity of the lithium iron phosphate particles are tested separately. The average value of the forward resistivity and the reverse resistivity is taken as the powder resistivity of the lithium iron phosphate particles.

By enabling the lithium iron phosphate particles to satisfy at least one of (a) to (e), the lithium iron phosphate particles can better achieve the technical effects of the present application.

The present application provides a preparation method for a positive electrode active material. The preparation method includes: mixing lithium iron phosphate particles and lithium nickel cobalt manganese oxide particles.

A preparation process of the lithium iron phosphate particles includes: providing raw materials containing at least a lithium source, an iron source, a phosphorus source, optionally a carbon source, optionally a carbon film-forming agent, and optionally a modifier, and performing sintering at least twice, where
a temperature of a first sintering is 500-760 °C, and in some embodiments, 550-720 °C; and
a temperature of a second sintering is 700-800 °C, and in some embodiments, 720-780 °C.

In some embodiments, the temperature of the first sintering may be 500 °C, 530 °C, 550 °C, 580 °C, 600 °C, 630 °C, 650 °C, 680 °C, 700 °C, 710 °C, 720 °C, 730 °C, 740 °C, 750 °C, 760 °C, or a numerical value within a range defined by any two of the aforementioned temperatures of the first sintering; the temperature of the second sintering may be 700 °C, 710 °C, 720 °C, 730 °C, 740 °C, 750 °C, 760 °C, 770 °C, 780 °C, 790 °C, 800 °C, or a numerical value within a range defined by any two of the aforementioned temperatures of the second sintering.

In some embodiments, heating rates of the first sintering and the second sintering are each independently 2-20 degrees Celsius/minute (°C/min).

In some embodiments, the heating rates of the first sintering and the second sintering are each independently 2 °C/min, 5 °C/min, 7 °C/min, 10 °C/min, 13 °C/min, 15 °C/min, 17 °C/min, or 20 °C/min.

In some embodiments, a constant-temperature sintering time of the first sintering is 1-6 h. In some embodiments, the constant-temperature sintering time of the first sintering may be 1 h, 1.5 h, 2 h, 2.5 h, 3 h, 3.5 h, 4 h, 4.5 h, 5 h, 5.5 h, or 6 h.

In some embodiments, a constant-temperature sintering time of the second sintering is 2-12 h. In some embodiments, the constant-temperature sintering time of the second sintering may be 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5 h, or 12 h.

Compared to the conventional preparation method of achieving particle growth at a high temperature, the lithium iron phosphate particles of the present application are subjected to sintering twice. Controlling the temperatures of the two sintering processes is conducive to preparing the lithium iron phosphate particles having the average primary particle size and specific surface area of the present application. Furthermore, controlling the heating rate, the sintering temperature, and the constant-temperature sintering time of the first sintering and/or the second sintering helps to reduce side reactions, thereby better preparing the lithium iron phosphate particles of the present application. Furthermore, during conventional high-temperature sintering, the carbon coating layer on the surface of the particles is prone to cracking, reducing the integrity of the carbon coating. In the present application, synthesizing large particles at a low temperature is conducive to improving the consistency and uniformity of surface carbon coating.

In some embodiments, the lithium iron phosphate particles are mainly obtained by a following preparation method: providing raw materials containing at least a lithium source, an iron source, a phosphorus source, a carbon source, a carbon film-forming agent, and a modifier, and performing sintering at least twice, where
a carbon content of a material after a first sintering is 0.01-0.79 wt%, and in some embodiments, 0.05-0.4 wt%; and
a carbon content of a material after a second sintering is 0.8-2.0 wt%, and in some embodiments, 1.0-1.6 wt%.

In some embodiments, the carbon content of the material after the first sintering may be 0.01 wt%, 0.05 wt%, 0.1 wt%, 0.15 wt%, 0.20 wt%, 0.25 wt%, 0.30 wt%, 0.35 wt%, 0.40 wt%, 0.45 wt%, 0.50 wt%, 0.55 wt%, 0.60 wt%, 0.65 wt%, 0.70 wt%, 0.75 wt%, 0.79 wt%, or a numerical value within a range defined by any two of the aforementioned carbon contents; the carbon content of the material after the second sintering may be 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, or a numerical value within a range defined by any two of the aforementioned carbon contents.

Adding the carbon source before the first sintering can effectively reduce the trivalent iron in the raw materials and improve the product purity and stability. Furthermore, adding a lower content of the carbon source during the first sintering is conducive to reducing the hindering effect of the carbon layer on the growth process of the lithium iron phosphate particles, and is conducive to the crystalline growth of the lithium iron phosphate particle precursor at a lower temperature. Additionally, the low carbon content during the first sintering is also conducive to the solid-phase diffusion reaction between the possibly added modifier and the lithium iron phosphate material, thereby facilitating a relatively high concentration of metal ion doping. Increasing the added carbon content in the second sintering further improves the uniformity and integrity of the coating, which is conducive to obtaining the lithium iron phosphate particles having the carbon content according to the examples of the present application.

In some embodiments, raw materials containing a lithium source, an iron source, a phosphorus source, a carbon source, a modifier, and a carbon film-forming agent are at least provided and subjected to sintering at least twice.

In some embodiments, calculated by the atomic molar number of each element, a mixing ratio of the lithium source, the iron source, and the phosphorus source satisfies Fe: P = (0.96-0.985):1 and Li: Fe = (1.0-0.95):1.1.

In some embodiments, calculated by the atomic molar number of each element, the mixing ratio of the iron source and the phosphorus source satisfies Fe: P = 0.96:1, Fe: P = 0.965:1, Fe: P = 0.97:1, Fe: P = 0.975:1, Fe: P = 0.98:1, or Fe: P = 0.985:1.

In some embodiments, calculated by the atomic molar number of each element, the mixing ratio of the lithium source and the iron source satisfies Li: Fe = 1.0:1.1, Li: Fe = 0.99:1.1, Li: Fe = 0.98:1.1, Li: Fe = 0.97:1.1, Li: Fe = 0.96:1.1, or Li: Fe = 0.95:1.1.

In some embodiments, a weight ratio of the carbon source to the carbon film-forming agent is (9-0.25):1. In some embodiments, the weight ratio of the carbon source to the carbon film-forming agent may be 9:1, 8:1, 7:1, 6:1, 5:1, 4:1, 3:1, 2:1, 1:1, 0.8:1, 0.5:1, or 0.25:1.

In some embodiments, the lithium source is a lithium-containing compound. In some embodiments, the lithium source includes at least one of lithium dihydrogen phosphate, lithium oxalate, lithium carbonate, lithium oxide, lithium hydroxide, or lithium acetate. In some embodiments, the lithium source includes lithium carbonate.

In some embodiments, the iron source is an iron-containing compound. In some embodiments, the iron source includes at least one of iron hydroxide, ferrous chloride, ferric oxide, iron phosphate, ferric pyrophosphate, ferrous oxalate, iron powder, ferric nitrate, triiron tetraoxide, or iron oxyhydroxide. In some embodiments, the iron source includes ferric oxide.

In some embodiments, the phosphorus source is a phosphate compound. In some embodiments, the phosphorus source includes at least one of phosphoric acid, ammonium dihydrogen phosphate, or diammonium hydrogen phosphate. In some embodiments, the phosphorus source includes phosphoric acid.

In some embodiments, the carbon source includes at least one of citric acid, glucose, sucrose, starch, fructose, or lactose. In some embodiments, the carbon source includes glucose.

In some embodiments, the carbon film-forming agent includes at least one of polyethylene glycol, polyaniline, polyacrylonitrile, polyvinylpyrrolidone, or polyvinyl alcohol. In some embodiments, the carbon film-forming agent includes polyaniline.

In some embodiments, the modifier includes at least one of titanium dioxide, vanadium pentoxide, tetrabutyl titanate, ammonium metavanadate, niobium ethoxide, niobium oxalate, niobium pentoxide, magnesium hydroxide, or magnesium nitrate. In some embodiments, the modifier includes titanium dioxide.

Using the raw materials in the above ratios is conducive to forming the lithium iron phosphate particles of the present application.

In some embodiments, the lithium iron phosphate particles contain at least one of Ti, V, Mg, and/or Nb elements, and calculated based on the total weight of the lithium iron phosphate particles, the content of the elements is 1000-10000 ppm, and in some embodiments, 2500-6000 ppm.

In some embodiments, the content of the elements is optionally 2500-6000 ppm. Specifically, the content of the element is optionally 2500 ppm, 2600 ppm, 2700 ppm, 2800 ppm, 2900 ppm, 3000 ppm, 3100 ppm, 3200 ppm, 3300 ppm, 3400 ppm, 3500 ppm, 3600 ppm, 3700 ppm, 3800 ppm, 3900 ppm, 4000 ppm, 4100 ppm, 4200 ppm, 4300 ppm, 4400 ppm, 4500 ppm, 4600 ppm, 4700 ppm, 4800 ppm, 4900 ppm, 5000 ppm, 5100 ppm, 5200 ppm, 5300 ppm, 5400 ppm, 5500 ppm, 5600 ppm, 5700 ppm, 5800 ppm, 5900 ppm, 6000 ppm, or within a range defined by any two of the aforementioned numerical values.

Doping the lithium iron phosphate of the embodiments of the present application with one or more of the above elements and controlling the content thereof within the above range can better achieve the bulk-phase metal modification of the lithium iron phosphate particles while improving the average primary particle size of the lithium iron phosphate particles, thereby further enhancing the bulk-phase ion transport capability of the lithium iron phosphate particles and improving the kinetic performance and specific capacity.

In some embodiments, a first pulverization is performed after the first sintering, and a second pulverization is performed after the second sintering, where
a Dv50 of a product after the first pulverization is 300-1200 nm, and in some embodiments, 400-1100 nm; and
a Dv50 of a product after the second pulverization is 500-5000 nm, and in some embodiments, 700-2500 nm.

In some embodiments, the Dv50 of the product after the first pulverization may be 300 nm, 400 nm, 500 nm, 600 nm, 700 nm, 800 nm, 900 nm, 1000 m, 1100 nm, 1200 nm, or a numerical value within a range defined by any two of the aforementioned Dv50 values of the product after the first pulverization.

In some embodiments, the Dv50 of the product after the second pulverization may be 300 nm, 400 nm, 500 nm, 600 nm, 700 nm, 800 nm, 900 nm, 1000 nm, 1100 nm, 1200 nm, 1300 nm, 1400 nm, 1500 nm, 1700 nm, 1900 nm, 2000 nm, 2300 nm, 2500 nm, 2700 nm, 2900 nm, 3000 nm, 3200 nm, 3400 nm, 3600 nm, 3800 nm, 4000 nm, 4200 nm, 4400 nm, 4600 nm, 4800 nm, 5000 nm, or a numerical value within a range defined by any two of the aforementioned Dv50 values of the product after the second pulverization.

In some embodiments, the pulverization includes one or more of mechanical crushing, grinding, sand milling, and jet milling.

Controlling the Dv50 of the product after the first pulverization within the above range is conducive to reducing the hindering effect of the added carbon source and the possibly added doping elements on the crystal growth of the lithium iron phosphate particle precursor, which helps to prepare a micron-sized lithium iron phosphate particle precursor. Controlling the Dv50 value of the product after the second pulverization within the above range helps to obtain the lithium iron phosphate particles having the average primary particle size of the present application.

### [Positive Electrode Plate]

The present application provides a positive electrode plate. The positive electrode plate includes the positive electrode active material described in the present application or a positive electrode active material obtained by the preparation method described in the present application.

In some embodiments, the compacted density of the positive electrode plate is 3.0-3.5 g/cm³.

In some embodiments, the compacted density of the positive electrode plate may be 3.0 g/cm³, 3.1 g/cm³, 3.2 g/cm³, 3.3 g/cm³, 3.4 g/cm³, 3.5 g/cm³, or a numerical value within a range defined by any two of the aforementioned compacted density values of the positive electrode plate.

The compacted density of the electrode plate may be tested by methods and devices known in the art. As an example, when the electrode plate is coated on a single side, the compacted density of the film layer on one side of the electrode plate = m / (V1 - V2); when the electrode plate is coated on both sides, the compacted density of the film layer on one side of the electrode plate = m / [2 × (V1 - V2)], where m represents the weight of the film layer, V1 represents the volume of the electrode plate, and V2 represents the volume of the current collector. m may be obtained by subtracting the weight of the current collector from the weight of the electrode plate; the product of the surface area of the electrode plate and the thickness of the electrode plate is the volume V1 of the electrode plate; the product of the surface area of the electrode plate and the thickness of the current collector is V2; and the thickness of the current collector and the thickness of the electrode plate are obtained by measuring the thickness of the uncoated foil in the tab region using a micrometer.

In the examples of the present application, the compacted density of the positive electrode active material is 3.0-3.5 g/cm³, and a relatively high compacted density is conducive to improving the energy density of the secondary battery.

In some embodiments, the positive electrode plate includes a positive electrode current collector and a positive electrode film layer disposed on at least one surface of the positive electrode current collector. The positive electrode film layer includes a positive electrode active material, a binder, and a conductive agent, and the positive electrode active material is the positive electrode active material of the examples of the present application or a positive electrode active material prepared by the preparation method of the examples of the present application.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, or a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), or polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, or a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which may be selected based on requirements. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, or diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the secondary battery further includes a separator. The present application does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, or polyvinylidene fluoride. The separator may be a single-layer film or a multi-layer composite film, which is not specified. When the separator is a multi-layer composite film, the materials of the layers may be the same or different, which is not specified.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured to package the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

### [Secondary Battery]

The present application provides a secondary battery. The secondary battery includes the positive electrode plate of the examples of the present application.

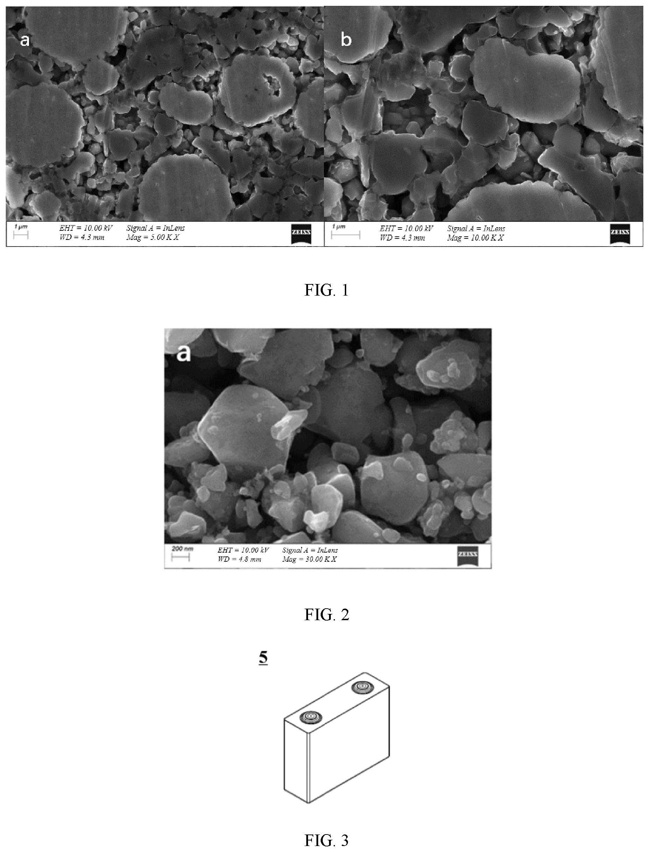

The present application does not particularly limit the shape of the secondary battery, and it may have a cylindrical shape, a prismatic shape, or any other shape. For example, FIG. 3 shows a secondary battery 5 having a prismatic structure as one example.

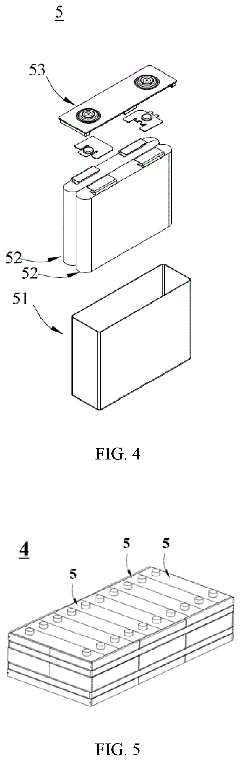

In some embodiments, referring to FIG. 4, the outer packaging may include a shell body 51 and a cover plate 53. The shell body 51 may include a bottom plate and side plates connected to the bottom plate, and the bottom plate and the side plates define, in an enclosing manner, an accommodating cavity. The shell body 51 is provided with an opening in communication with the accommodating cavity, and the cover plate 53 is capable of covering the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution wets the electrode assembly 52. The number of the electrode assemblies 52 included in the secondary battery 5 may be one or more, and those skilled in the art can select the number based on specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 5 shows a battery module 4 as one example. Referring to FIG. 5, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

In some embodiments, the battery module 4 may further include a shell provided with an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

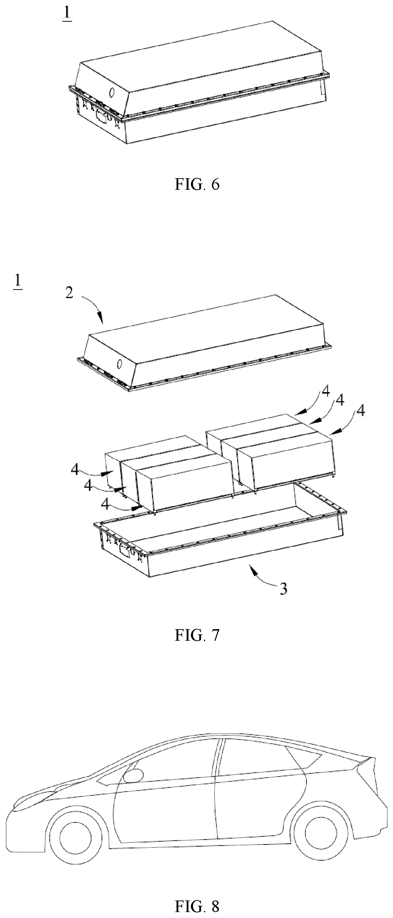

FIGS. 6 and 7 show a battery pack 1 as one example. Referring to FIGS. 6 and 7, the battery pack 1 may include a battery case and a plurality of battery modules 4 arranged in the battery case. The battery case includes an upper case body 2 and a lower case body 3. The upper case body 2 is capable of covering the lower case body 3 to form a closed space for accommodating the battery modules 4. The plurality of battery modules 4 may be arranged in any manner in the battery case.

### [Electric Device]

In addition, the present application further provides an electric device. The electric device includes the secondary battery of the examples of the present application.

In some embodiments, the electric device of the examples of the present application may further include at least one of a battery module or a battery pack. The secondary battery, the battery module, or the battery pack can be used as a power source for the electric device, and can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

As the electric device, a secondary battery, a battery module, or a battery pack may be selected based on usage requirements thereof.

FIG. 8 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery may thus be used as a power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

### I. Preparation Method

### 1) Preparation of positive electrode active material

### Preparation of lithium iron phosphate particles:

Lithium carbonate, ferric oxide, phosphoric acid, glucose, titanium dioxide (calculated by the total weight of the lithium iron phosphate particles, the addition amount of the titanium dioxide satisfied that the titanium content in the prepared lithium iron phosphate particles was 5000 ppm), and polyaniline were weighed separately, where the weight ratio of element Li, element Fe, and element P satisfied Fe: P = 0.968:1 and Li: Fe = 1:0.98, and the weight ratio of the glucose to the polyaniline satisfied glucose: polyaniline = 1:2. An addition amount of the glucose and the polyaniline satisfied that after the first sintering was completed, the carbon content accounted for 0.15% of the weight of the lithium iron phosphate precursor. Water was added to the above substances to obtain a mixture slurry.

The mixture slurry was uniformly mixed using a ball mill, and milling was performed using a sand mill to obtain a slurry having a solid content of 38% and a Dv50 of 400 nm, followed by spray drying (the negative pressure of the high-speed spray dryer was -650 to -200 pascals (Pa), the inlet temperature was 300-360 °C, and the outlet temperature was 100-140°C). The dried reactants were loaded into a sintering furnace for the first sintering; the heating rate was controlled at 5 °C/min, the holding temperature was controlled at 650 °C, and the holding time was 4 h. After the materials were cooled, the materials were pulverized by a mechanical mill to obtain a powder.

The obtained powder, the glucose, the polyaniline, and the water were mixed (calculated by the total weight of the lithium iron phosphate particles, the addition amount of the glucose and the polyaniline satisfied that the carbon content of the product after the second sintering is 1.2%, and the weight ratio of the glucose to the polyaniline satisfied that glucose: polyaniline = 1:2), and the solid content was 40%. After uniform mixing, the mixture was processed using the ball mill and the sand mill to obtain a slurry, and the Dv50 of insoluble matters in the slurry was 550 nm. The slurry was spray-dried (the negative pressure of the high-speed spray dryer was -650 to -200 Pa, the inlet temperature was 300-360 °C, and the outlet temperature was 100-140 °C). The dried reactants were loaded into the sintering furnace for a second low-temperature sintering (the heating rate was controlled at 5 °C/min, the sintering temperature was 750 °C, and the sintering time was 4 h). After the materials were cooled, the materials were subjected to a second pulverization to an average primary particle size of 870 nm, and after demagnetization, the lithium iron phosphate particles were obtained, where the carbon content was 1.2%, and the content of element Ti in the lithium iron phosphate particles was 5000 ppm. The obtained lithium iron phosphate particles were observed under a scanning electron microscope, and the result is shown in FIG. 2.

The lithium nickel cobalt manganese oxide particles were purchased from Guangdong Brunp Recycling Technology Co., Ltd., and the model was CPE-16; the BET value and Dv50 value are shown in Table 1.

The lithium iron phosphate particles and the lithium nickel cobalt manganese oxide particles were blended according to the masses listed in Table 1 to obtain a positive electrode active material.

### 2) Preparation of positive electrode plate

2.0 wt% polyvinylidene fluoride binder was fully dissolved in N-methylpyrrolidone (NMP), and then 1.0 wt% Super P, 0.5 wt% carbon nanotubes, and 96.5 wt% of the positive electrode material described above were added. The mixture was stirred and mixed uniformly to obtain a positive electrode slurry.

The positive electrode slurry was uniformly applied to the surface of a current collector aluminum foil at a single-sided weight of 252 mg/1540 mm², and the current collector aluminum foil was then transferred to a vacuum drying oven for complete drying. The dried electrode plate was calendered and then punched to obtain a positive electrode plate.

### 3) Preparation of negative electrode plate

Negative electrode active material artificial graphite, conductive agent carbon black, thickener carboxymethylcellulose, and binder styrene-butadiene rubber were added to deionized water at a mass ratio of 0.9735:0.007:0.01:0.0095, and the mixture was uniformly stirred to obtain a negative electrode slurry.

Then, the negative electrode slurry was uniformly coated on a copper foil at a single-sided weight of 139 mg/1540 mm², followed by drying, cold pressing, and slitting to obtain the negative electrode plate.

### 4) Preparation of separator

A polypropylene film was used as the separator.

### 5) Preparation of battery

The positive electrode plate, the separator, and the negative electrode plate were stacked in sequence, such that the separator was positioned between the positive electrode plate and the negative electrode plate to provide isolation, and then the stacked structure was wound to obtain a bare cell. Tabs were welded to the bare cell, and the bare cell was placed into an aluminum case and baked in a vacuum oven at 100 °C for 8 h. Subsequently, an electrolytic solution was injected, and the aluminum case was sealed to obtain an uncharged battery. The uncharged battery was then sequentially subjected to processes such as standing, cold and hot pressing, formation, shaping, and capacity testing to obtain the lithium-ion battery in Example 1.

The batteries in Examples 2-5 were similar to the preparation method of the battery in Example 1, except that the average primary particle size value of the lithium iron phosphate particles was adjusted; details are shown in Table 1. The preparation methods in Examples 2-5 differ from the preparation method in Example 1 in that:
Example 2: The Dv50 of the mixed slurry after the first milling was decreased to 350 nm.

Example 3: The Dv50 of the mixed slurry after the first milling was increased to 1200 nm.

Example 4: The Dv50 of the mixed slurry after the first milling was decreased to 450 nm.

Example 5: The Dv50 of the mixed slurry after the first milling was increased to 1100 nm.

The batteries in Examples 6-7 were similar to the preparation method of the battery in Example 1, except that the specific surface area value and the carbon content of the lithium iron phosphate particles were adjusted; details are shown in Table 1. The preparation methods in Examples 6-7 differ from the preparation method in Example 1 in that:
Example 6: The carbon content during the second sintering was adjusted to 0.8%.

Example 7: The carbon content during the second sintering was adjusted to 1.4%.

The batteries in Examples 8-9 were similar to the preparation method of the battery in Example 1, except that the specific surface area value of the lithium iron phosphate particles was adjusted; details are shown in Table 1. The preparation methods in Examples 8-9 differ from the preparation method in Example 1 in that:
Example 8: During the first sintering, the weight ratio of glucose to polyaniline was 1:4.

Example 9: During the first sintering, the weight ratio of glucose to polyaniline was 1:0.5.

The batteries in Examples 10-11 were similar to the preparation method of the battery in Example 1, except that the specific surface area value of the lithium nickel cobalt manganese oxide was adjusted; details are shown in Table 1. The lithium nickel cobalt manganese oxide particles in Example 10 were purchased from Guangdong Brunp Recycling Technology Co., Ltd., and the model was CPE17; the lithium nickel cobalt manganese oxide particles in Example 11 were purchased from Guangdong Brunp Recycling Technology Co., Ltd., and the model was CPE18.

The batteries in Examples 12-14 were similar to the preparation method of the battery in Example 1, except that the doping amount of element Q was adjusted; details are shown in Table 1. During the preparation of the lithium iron phosphate particles, the differences from Example 1 were as follows:
Example 12: The temperature of the first sintering was controlled at 590 °C, the temperature of the second sintering was controlled at 720 °C, and the Ti content was 0 ppm.

Example 13: The temperature of the first sintering was controlled at 620 °C, the temperature of the second sintering was controlled at 740 °C, and the Ti content was 2500 ppm.

Example 14: The temperature of the first sintering was controlled at 655 °C, the temperature of the second sintering was controlled at 755 °C, and the Ti content was 6000 ppm.

The batteries in Examples 15-18 were similar to the preparation method of the battery in Example 1, except that the Dv50 values of the lithium iron phosphate particles and the lithium nickel cobalt manganese oxide particles were adjusted; details are shown in Table 1. The preparation methods in Examples 15-18 differ from the preparation method in Example 1 in that:
Example 15: The Dv50 after the second sintering and the pulverization was controlled to be 870 m.

Example 16: The Dv50 after the second sintering and the pulverization was controlled to be 3500 nm.

The lithium nickel cobalt manganese oxide particles in Example 17 were purchased from Guangdong Brunp Recycling Technology Co., Ltd., and the model was CPE19.

The lithium nickel cobalt manganese oxide particles in Example 18 were purchased from Guangdong Brunp Recycling Technology Co., Ltd., and the model was CPE20.

The batteries in Examples 19-20 were similar to the preparation method of the battery in Example 1, except that the mass blending ratio of the lithium iron phosphate particles and the lithium nickel cobalt manganese oxide particles was adjusted; details are shown in Table 1.

The battery in Comparative Example 1 was similar to the preparation method of the battery in Example 1, except that the lithium iron phosphate particles used were different from the lithium iron phosphate particles in Example 1. The lithium iron phosphate particles used in Comparative Example 1 were purchased from Hunan Yuneng New Energy Battery Material Co., Ltd., and the model was CPF-087-1; the specific parameters are shown in Table 1.

The battery in Comparative Example 2 was similar to the preparation method of the battery in Example 1, except that the lithium iron phosphate particles used were different from the lithium iron phosphate particles in Example 1. The lithium iron phosphate particles used in Comparative Example 2 were purchased from Hunan Yuneng New Energy Battery Material Co., Ltd., and the model was CPF-087-2; the specific parameters are shown in Table 1.

The battery in Comparative Example 3 was similar to the preparation method of the battery in Example 1, except that the average primary particle size and the specific surface area of the lithium iron phosphate particles were adjusted; details are shown in Table 1. The preparation method in Comparative Example 2 differs from the preparation method in Example 1 in that: Comparative Example 2 only adopted a single sintering process, the sintering temperature was 750 °C, and the carbon content of the product after sintering was 1.2%.

The battery in Comparative Example 4 was similar to the preparation method of the battery in Example 1, except that the average primary particle size, the specific surface area, and the carbon content of the lithium iron phosphate particles were adjusted; details are shown in Table 1. The preparation method in Comparative Example 3 differs from the preparation method in Example 1 in that: in Comparative Example 3, the carbon content of the second sintering was reduced to 0.7%, and the BET and the average primary particle size were thus adjusted.

### II. Battery Performance Test

### 1. Performance test of positive electrode active material

### 1) Test method for average primary particle size of lithium iron phosphate particles

An argon ion beam was applied perpendicularly to a major surface of the positive electrode plate to cut open the electrode plate and expose a cross section; the cross section was photographed using a scanning electron microscope; the long-diameter statistical method was used to perform the statistical analysis on particle sizes of the lithium iron phosphate particles; specifically, the total number of lithium iron phosphate particles having a primary particle size greater than 80 nm and the sum of primary particle sizes of the lithium iron phosphate particles having a primary particle size greater than 80 nm might be statistically calculated in a scanning electron microscope photograph, and the average primary particle size of the lithium iron phosphate particles = the primary particle sizes of all the lithium iron phosphate particles / the total number of the lithium iron phosphate particles. During the statistical calculation of the primary particle size, particles satisfying 0 < primary particle size ≤ 80 nm are not within the statistical scope.

### 2) Test method for Dv50 value

Lithium iron phosphate particle: The Dv50 value of the lithium iron phosphate particles could be determined using a laser particle size analyzer (Malvern Master Size 3000) with reference to GB/T 19077.1-2016.

Lithium nickel cobalt manganese oxide particle: The Dv50 value of the lithium nickel cobalt manganese oxide particles could be determined using a laser particle size analyzer (Malvern Master Size 3000) with reference to GB/T 19077.1-2016.

### 3) Test method for specific surface area (BET)

According to the testing standard method of GB/T 19587-2017, the specific surface areas of the lithium iron phosphate particles and the lithium nickel cobalt manganese oxide particles were tested using a gas adsorption method. Specifically, the lithium iron phosphate particles or the lithium nickel cobalt manganese oxide particles were taken as a sample, and the sample tube was immersed in liquid nitrogen at -196 °C; the adsorption amount of nitrogen on the solid surface under different pressures was determined under a relative pressure of 0.05-0.30. Based on the BET multilayer adsorption theory and formula, the monolayer adsorption amount of the sample was calculated, thereby calculating the specific surface area of the sample.

### 4) Test method for carbon content of lithium iron phosphate particles

The carbon content of the lithium iron phosphate particles was tested by an infrared absorption method after burning the lithium iron phosphate particles using a high-frequency induction furnace. The specific testing process was based on the standard GB/T 20123-2006/ISO 15350:2000.

### 5) Test method for doping amount of element Q (e.g., element Ti) of lithium iron phosphate particles

The test method for the content of element Q of the lithium iron phosphate particles was performed with reference to GB/T 33822-2017.

### 6) Test method for solid content of positive electrode slurry

Electronic balance (precision 0.0001), oven, glass drying tray. 8-10 g of positive electrode slurry sample was taken and evenly applied on a sample tray, and the mass of the positive electrode slurry before drying was recorded as A. The sample tray applied with the positive electrode slurry sample was placed into an oven for heating, the heating temperature was 130 °C, and the heating time was 5 h. After drying and cooling, the sample tray was taken out, and the mass of the positive electrode slurry after drying was recorded. Drying was performed multiple times, and after the mass of the dried positive electrode slurry sample reached a constant weight, the mass was recorded as B. Solid content of positive electrode slurry = (A/B) × 100%.

### 7) Test method for filtration performance of positive electrode slurry

A 200-mesh filter screen was folded into an inverted triangle and placed into a 500 milliliter (mL) beaker, and 500 mL of the prepared positive electrode slurry was (completely) poured in. Timing was started when the slurry began to flow out from the tip of the filter screen, and the filtration time for the slurry in the beaker to reach 300 mL was recorded.

### 8) Measurement of η value of lithium iron phosphate particles

First, a coin cell was prepared by using the lithium iron phosphate particles as a positive electrode active material. The specific preparation process of the coin cell is as follows: 2.0000 g of the lithium iron phosphate particles was mixed with 0.1111 g of conductive carbon black and 0.1111 g of polyvinylidene fluoride, then the mixture was added to 2.5 g of organic solvent N-methylpyrrolidone, and the mixture was fully mixed uniformly to form a slurry. The slurry was coated on an aluminum foil with a coating thickness of 140 µm, and the coated aluminum foil was vacuum-dried at 120 °C for 2 h and punched into a circular disc with a diameter of 13 mm using a punch. The disc was pressed using a tablet press at 10 MPa and held under vacuum at 120 °C for 12 h to obtain a positive electrode plate. The positive electrode plate was weighed, where the loading capacity of the lithium iron phosphate particles was 11-12 mg. The coin cell was assembled in an argon-protected glove box, where a lithium metal foil was used as the negative electrode, the electrolytic solution was a mixed solvent of EC (ethylene carbonate) and DMC (1,2-dimethyl carbonate) at a volume ratio of 1:1, the electrolyte was LiPF6, and the separator was a Celgard 2400 microporous polyethylene film.

Electrical properties of the prepared coin cell were tested on a LAND battery tester. Specifically, the coin cell was charged and discharged at a constant current of 0.1C for two cycles in a voltage range of 2.0-3.75 V, and then charged and discharged at a constant current of 1C for one cycle; in the charge-discharge test at 1C, the capacity value at the discharge voltage of 3.2 V was extracted and recorded as C1, the capacity value upon discharging to 2.0 V was extracted and recorded as C2, and η = C1 / C2. The charging process included constant-voltage charging, with a constant voltage of 3.75 V and a constant-voltage cutoff current of 50 uA.

### 2. Battery performance test

### 1) Specific capacity of battery

The battery was placed in an oven environment at 25 °C and left to stand for 2 h until the battery temperature was maintained at 25 °C; the battery was discharged at a constant current of 1/3C to 2.0 V, followed by a pause of 5 min; after the battery was charged at a constant current of 1/3C to 4.35 V, the battery was charged at a constant voltage of 4.35 V to a cutoff current of 0.05C, followed by a pause of 5 min.

The battery was discharged at a constant current of 1/3C to 2.0 V. The capacity obtained in this step is the actual test capacity of the cell, and combined with the mass of the positive electrode active substance, the specific capacity of the battery can be calculated, with specific capacity = capacity / mass of positive electrode active substance.

### 2) Test method for compacted density of positive electrode plate

When the electrode plate was coated on a single side, the compacted density of the film layer on one side of the electrode plate = m / (V1 - V2); when the electrode plate was coated on both sides, the compacted density of the film layer on one side of the electrode plate = m / [2 × (V1 - V2)], where m represents the weight of the film layer, V1 represents the volume of the electrode plate, and V2 represents the volume of the current collector. m may be obtained by subtracting the weight of the current collector from the weight of the electrode plate; the product of the surface area of the electrode plate and the thickness of the electrode plate is the volume V1 of the electrode plate; the product of the surface area of the electrode plate and the thickness of the current collector is V2; and the thickness of the current collector and the thickness of the electrode plate are obtained by measuring the thickness of the uncoated foil in the tab region using a micrometer.

### III. Analysis of Test Results of Examples and Comparative Examples

The batteries of the examples and the comparative examples were respectively prepared according to the above methods, and various performance parameters were measured. The parameter table of the positive electrode active materials is shown in Table 1, and the performance test result table is shown in Table 2.

**Table 1 Parameter table of positive electrode active materials**

| Serial number | Lithium iron phosphate particle | | | | | | | | Lithium nickel cobalt manganese oxide particle | | | Ratio of Dv50 of lithium iron phosphate particle to Dv50 of lithium nickel cobalt manganese oxide particle |
|---|---|---|---|---|---|---|---|---|---|---|---|---|
| | Average primary particle size (nm) | BET (m²/g) | Carbon content (wt%) | Z | Dv50 (nm) | Q content (ppm) | Mass percentage (%) | η (%) | BET (m²/g) | Dv50 (nm) | Mass percentage (%) | |
| Example 1 | 870 | 6 | 1.2 | 5.00 | 1200 | 5000 | 30 | 92.2 | 0.7 | 4000 | 70 | 1:3.33 |
| Example 2 | 500 | 7 | 1.2 | 5.83 | 800 | 5000 | 30 | 94.1 | 0.7 | 4000 | 70 | 1:5 |
| Example 3 | 3000 | 5 | 1.2 | 4.17 | 3200 | 5000 | 30 | 90.1 | 0.7 | 4000 | 70 | 1:1.25 |
| Example 4 | 650 | 6 | 1.2 | 5.00 | 950 | 5000 | 30 | 93 | 0.7 | 4000 | 70 | 1:4.21 |
| Example 5 | 2500 | 5.3 | 1.2 | 4.42 | 2800 | 5000 | 30 | 91.2 | 0.7 | 4000 | 70 | 1:1.43 |
| Example 6 | 870 | 3 | 0.8 | 3.75 | 1500 | 5000 | 30 | 88.1 | 0.7 | 4000 | 70 | 1:2.67 |
| Example 7 | 870 | 8 | 1.4 | 5.71 | 1000 | 5000 | 30 | 94.5 | 0.7 | 4000 | 70 | 1:5.33 |
| Example 8 | 870 | 3 | 2 | 1.50 | 1200 | 5000 | 30 | 88.5 | 0.7 | 4000 | 70 | 1:3.33 |
| Example 9 | 870 | 8 | 0.94 | 8.50 | 1200 | 5000 | 30 | 91 | 0.7 | 4000 | 70 | 1:3.33 |
| Example 10 | 870 | 6 | 1.2 | 5.00 | 1200 | 5000 | 30 | 92.2 | 0.6 | 4200 | 70 | 1:3.5 |
| Example 11 | 870 | 6 | 1.2 | 5.00 | 1200 | 5000 | 30 | 92.2 | 1.7 | 1800 | 70 | 1:1.5 |
| Example 12 | 870 | 6 | 1.2 | 5.00 | 1200 | 0 | 30 | 82 | 0.7 | 4000 | 70 | 1:3.33 |
| Example 13 | 870 | 6 | 1.2 | 5.00 | 1200 | 2500 | 30 | 90 | 0.7 | 4000 | 70 | 1:3.33 |
| Example 14 | 870 | 6 | 1.2 | 5.00 | 1200 | 6000 | 30 | 95 | 0.7 | 4000 | 70 | 1:3.33 |
| Example 15 | 870 | 6 | 1.2 | 5.00 | 870 | 5000 | 30 | 94.1 | 0.7 | 4000 | 70 | 1:5.71 |
| Example 16 | 870 | 6 | 1.2 | 5.00 | 3500 | 5000 | 30 | 89 | 0.7 | 4000 | 70 | 1:1.14 |
| Example 17 | 870 | 6 | 1.2 | 5.00 | 1200 | 5000 | 30 | 92.2 | 1.9 | 1200 | 70 | 1:1 |
| Example 18 | 870 | 6 | 1.2 | 5.00 | 1200 | 5000 | 30 | 92.2 | 0.4 | 20000 | 70 | 1:16.67 |
| Example 19 | 870 | 6 | 1.2 | 5.00 | 1200 | 5000 | 5 | 92.2 | 0.7 | 4000 | 95 | 1:3.33 |
| Example 20 | 870 | 6 | 1.2 | 5.00 | 1200 | 5000 | 80 | 92.2 | 0.7 | 4000 | 20 | 1:3.33 |
| Comparative Example 1 | 360 | 12.8 | 1.2 | 10.67 | 500 | 1500 | 30 | 85 | 0.7 | 4000 | 70 | 1:8 |
| Comparative Example 2 | 870 | 12 | 1.2 | 10.00 | 1200 | 1500 | 30 | 75 | 0.7 | 4000 | 70 | 1:3.33 |
| Comparative Example 3 | 5000 | 4 | 1.2 | 3.33 | 5600 | 5000 | 30 | 78.2 | 0.7 | 4000 | 70 | 1:0.72 |
| Comparative Example 4 | 3500 | 2.4 | 0.7 | 3.43 | 3800 | 5000 | 30 | 84 | 0.7 | 4000 | 70 | 1:1.05 |

**Table 2 Performance test result table**

| Serial number | Solid content of positive electrode slurry (%) | Filtration time of 300 mL positive electrode slurry (s) | Specific capacity (mAh/g) | Compacted density (g/cm³) |
|---|---|---|---|---|
| Example 1 | 65.0 | 150 | 171 | 3.35 |
| Example 2 | 64.5 | 180 | 173 | 3.30 |
| Example 3 | 68.0 | 130 | 165 | 3.25 |
| Example 4 | 64.8 | 170 | 172 | 3.32 |
| Example 5 | 67.5 | 150 | 167 | 3.28 |
| Example 6 | 69.0 | 120 | 167 | 3.38 |
| Example 7 | 63.5 | 195 | 172 | 3.34 |
| Example 8 | 63.7 | 165 | 166 | 3.3 |
| Example 9 | 66.4 | 145 | 165 | 3.35 |
| Example 10 | 65.8 | 145 | 170 | 3.3 |
| Example 11 | 61.0 | 170 | 173 | 3.25 |
| Example 12 | 65.0 | 150 | 169 | 3.25 |
| Example 13 | 65.0 | 150 | 170 | 3.25 |
| Example 14 | 65.0 | 150 | 170 | 3.25 |
| Example 15 | 64.0 | 178 | 172 | 3.25 |
| Example 16 | 68.8 | 120 | 168 | 3.15 |
| Example 17 | 60.0 | 190 | 174 | 3.1 |
| Example 18 | 69.0 | 175 | 168 | 3.15 |
| Example 19 | 70.5 | 100 | 183 | 3.42 |
| Example 20 | 67.0 | 220 | 158 | 3.2 |
| Comparative Example 1 | 58.0 | 300 | 158 | 3.05 |
| Comparative Example 2 | 59.0 | 265 | 156 | 3.35 |
| Comparative Example 3 | 70.5 | 120 | 156 | 3.15 |
| Comparative Example 4 | 68.5 | 110 | *155* | 3.1 |

According to the results in the above tables, as can be seen from Examples 1-20 and Comparative Example 1, increasing the average primary particle size of the lithium iron phosphate particles and reducing the specific surface area of the lithium iron phosphate particles can increase the solid content and the filtration performance of the positive electrode slurry, which is conducive to alleviating processing problems. As can be seen from Examples 1-20 and Comparative Example 2, reducing the specific surface area of the lithium iron phosphate particles is conducive to increasing the solid content and the filtration performance of the positive electrode slurry, which is conducive to alleviating processing problems. As can be seen from Examples 1-18 and Comparative Example 3, the average primary particle size of the lithium iron phosphate particles of the present application is conducive to maintaining and ensuring a relatively good specific capacity. As can be seen from Examples 1-18 and Comparative Example 4, when the BET of the lithium iron phosphate particles is too small, the specific capacity of the secondary battery will be reduced. In summary, when the average primary particle size of the lithium iron phosphate particles is 500-3000 nm, the specific surface area BET of the lithium iron phosphate particles is 3-8 m²/g, and the specific surface area BET of the lithium nickel cobalt manganese oxide particles is 0.4-2.0 m²/g, the specific capacity of the secondary battery can be ensured while improving the processability of the positive electrode slurry.

As can be seen from FIGS. 1a and 1b, the lithium nickel cobalt manganese oxide particles and the lithium iron phosphate particles are uniformly mixed, and the lithium iron phosphate particles densely pack the pores of the lithium nickel cobalt manganese oxide particles. The scanning electron microscope image of FIG. 2 shows the micro-morphology of the lithium iron phosphate particles in Example 1 of the present application. As can be seen from the figure, the lithium iron phosphate in Example 1 of the present application presents a large single-crystal morphology.

As can be seen from Examples 1-5, when the average primary particle size of the lithium iron phosphate particles is controlled to be 500-3000 nm, the specific capacity of the secondary battery can be ensured while improving the processability of the positive electrode slurry.

As can be seen from Examples 1, 6-7, and 10-11, when the BET value of the lithium iron phosphate particles is controlled to be 3-8 m²/g, and the BET value of the lithium nickel cobalt manganese oxide particles is controlled to be 0.4-2.0 m²/g, the specific capacity of the secondary battery can be ensured while improving the processability of the positive electrode slurry.

As can be seen from Examples 1 and 8-9, increasing the proportion of the carbon source film-forming agent is conducive to achieving the dense coating of the carbon layer, and the density of carbon coating of the present application is conducive to further improving the kinetic performance and the specific capacity of the secondary battery.

As can be seen from Examples 1 and 12-14, adding a metal element, such as the titanium element, to the lithium iron phosphate particles can improve the kinetic performance of the positive electrode active material. Furthermore, increasing the content of the metal element, for example, within the range of 1000-10000 ppm, is conducive to further improving the kinetic performance and minimizing the influence on the specific capacity of the lithium iron phosphate particles.

As can be seen from Examples 1 and 15-18, when the Dv50 of the lithium iron phosphate particles is 500-5000 nm, the Dv50 of the lithium nickel cobalt manganese oxide particles is 1200-20000 nm, and the ratio of the Dv50 of the lithium iron phosphate particles to the Dv50 of the lithium nickel cobalt manganese oxide particles satisfies 1:(1-50), it is conducive to improving the compacted density of the positive electrode plate.

As can be seen from Examples 1 and 19-20, controlling the mass percentage of the lithium iron phosphate particles and the lithium nickel cobalt manganese oxide particles within a suitable range, for example, when the mass percentage of the lithium iron phosphate particles is 5%-80%, and the mass percentage of the lithium nickel cobalt manganese oxide particles is 95%-20%, it is helpful to further balance the processability, the electrical performance, and the cost of the positive electrode active material.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode active material, wherein the positive electrode active material comprises lithium iron phosphate particles and lithium nickel cobalt manganese oxide particles; an average primary particle size of the lithium iron phosphate particles is 500-3000 nm, a specific surface area BET of the lithium iron phosphate particles is 3-8 m²/g, and a specific surface area BET of the lithium nickel cobalt manganese oxide particles is 0.4-2.0 m²/g.

2. The positive electrode active material according to claim 1, wherein the lithium iron phosphate particles have a molecular formula Liₘ₁Feₓ₁P_{y1}O_{z1}Q_{q1}, wherein Q comprises at least one of Al, Na, K, Mg, Cu, Mn, Cr, Zn, Pb, Ca, Co, Ni, Sr, Nb, V, Ti, B, S, Si, N, F, Cl, or Br, 0.95 ≤ m1 ≤ 1.15, 0.9 ≤ x1 ≤ 1, 0.95 ≤ y1 ≤ 1, 3.5 ≤ z1 ≤ 4, and 0 < q1 ≤ 0.1; and/or
the lithium nickel cobalt manganese oxide particles have a molecular formula LiRₓ₂Ni_{y2}Co_{z2}Mn_{1-x2-y2-z2}O₂, wherein the R comprises at least one of Cr, Ti, V, Mg, Al, or Nb, 0 ≤ x2 < 1, 0 < y2 < 1, 0 < z2 < 1, and 0 < x2 + y2 + z2 < 1.

3. The positive electrode active material according to claim 1 or 2, wherein an average primary particle size of the lithium iron phosphate particles is 650-2500 nm.

4. The positive electrode active material according to any one of claims 1 to 3, wherein a BET of the lithium iron phosphate particles is 4-7 m²/g, and a BET of the lithium nickel cobalt manganese oxide particles is 0.6-2.0 m²/g.

5. The positive electrode active material according to any one of claims 1 to 4, wherein calculated based on a total weight of the lithium iron phosphate particles, a carbon content of the lithium iron phosphate particles is 0.8-2.0 wt%.

6. The positive electrode active material according to any one of claims 1 to 5, wherein calculated based on a total weight of the lithium iron phosphate particles, a carbon content of the lithium iron phosphate particles is 1.0-1.6 wt%.

7. The positive electrode active material according to any one of claims 2 to 6, wherein the Q comprises at least one of Ti, V, Mg, or Nb; and
calculated based on a total weight of the lithium iron phosphate particles, a content of Q in the lithium iron phosphate particles is 1000-10000 ppm.

8. The positive electrode active material according to any one of claims 1 to 7, wherein a Dv50 of the lithium iron phosphate particles is 500-5000 nm.

9. The positive electrode active material according to any one of claims 1 to 8, wherein a Dv50 of the lithium nickel cobalt manganese oxide particles is 1200-20000 nm.

10. The positive electrode active material according to any one of claims 1 to 9, wherein a Dv50 of the lithium iron phosphate particles is 870-1500 nm, and a Dv50 of the lithium nickel cobalt manganese oxide particles is 1800-4200 nm.

11. The positive electrode active material according to any one of claims 1 to 10, wherein calculated by a total mass of the positive electrode active material, a mass percentage of the lithium iron phosphate particles is 5%-80%.

12. The positive electrode active material according to any one of claims 1 to 11, wherein calculated by a total mass of the positive electrode active material, a mass percentage of the lithium nickel cobalt manganese oxide particles is 20%-95%.

13. The positive electrode active material according to any one of claims 1 to 12, wherein a capacity proportion η of the lithium iron phosphate particles is ≥ 88%, and the η is defined as follows:
a battery having the lithium iron phosphate particles as the positive electrode active material is charged and discharged at a constant current of 0.1C for two cycles in a voltage range of 2.0-3.75 V, and then charged and discharged at a constant current of 1C for one cycle; in the charge-discharge test at 1C, a capacity value at a discharge voltage of 3.2 V is extracted and recorded as C1, a capacity value upon discharging to 2.0 V is extracted and recorded as C2, and η = C1 / C2; wherein a charging process comprises constant-voltage charging, with a constant voltage of 3.75 V and a constant-voltage cutoff current of 50 uA.

14. The positive electrode active material according to any one of claims 1 to 13, wherein the lithium iron phosphate particles satisfy at least one of (a) to (e):
a) a Dv10 of the lithium iron phosphate particles is ≥ 200 nm;
b) a Dv90 of the lithium iron phosphate particles is ≤ 10000 m;
c) a Dv99 of the lithium iron phosphate particles is ≤ 12000 nm;
d) a powder compacted density of the lithium iron phosphate under a pressure of 3T is ≥ 2.25 g/cm³; or
e) a powder resistivity of the lithium iron phosphate is less than 60 Ω·cm.

15. A preparation method for a positive electrode active material, wherein the preparation method comprises: mixing lithium iron phosphate particles and lithium nickel cobalt manganese oxide particles,
wherein a preparation process of the lithium iron phosphate particles comprises: providing raw materials containing at least a lithium source, an iron source, and a phosphorus source, and performing sintering at least twice, wherein
a temperature of a first sintering is 500-760 °C; and
a temperature of a second sintering is 700-800 °C.

16. The preparation method according to claim 15, wherein the lithium iron phosphate particles are mainly obtained by a following preparation method:
providing raw materials containing at least a lithium source, an iron source, a phosphorus source, a carbon source, a carbon film-forming agent, and a modifier, and performing sintering at least twice, wherein
a carbon content of a material after a first sintering is 0.01-0.79 wt%; and
a carbon content of a material after a second sintering is 0.8-2.0 wt%.

17. The preparation method according to claim 15 or 16, wherein the lithium iron phosphate particles contain at least one of Ti, V, Mg, and/or Nb elements, and calculated based on a total weight of the lithium iron phosphate particles, a content of the elements is 1000-10000 ppm.

18. The preparation method according to any one of claims 15 to 17, wherein a first pulverization is performed after the first sintering, and a second pulverization is performed after the second sintering, wherein
a Dv50 of a product after the first pulverization is 300-1200 nm; and
a Dv50 of a product after the second pulverization is 500-5000 nm.

19. A positive electrode plate, wherein the positive electrode plate comprises the positive electrode active material according to any one of claims 1 to 14 or a positive electrode active material obtained by the preparation method according to any one of claims 15 to 18.

20. The positive electrode plate according to claim 19, wherein a compacted density of the positive electrode plate is 3.0-3.5 g/cm³.

21. A secondary battery, wherein the secondary battery comprises the positive electrode plate according to claim 19 or 20.

22. An electric device, wherein the electric device comprises the secondary battery according to claim 21.
